# EUROPEAN PATENT APPLICATION

(11) **EP 4 852 145 A1**
(43) Date of publication of application: **09.12.2026**
(21) Application number: 26181667.2
(22) Date of filing: 28.05.2026
(51) Int. Cl.: H01M 10/613, H01M 10/625, H01M 10/647, H01M 10/6556, H01M 10/6568, H01M 50/211

(54) **POUCH-TYPE BATTERY COOLING APPARATUS**

(30) Priority: 04.06.2025 KR 20250073154; 01.12.2025 KR 20250187339
(71) Applicant: SK Innovation Co., Ltd., Seoul 03188 (KR); SK On Co., Ltd., Seoul 03161 (KR)
(72) Inventor: CHO, June Ho, 34124 Daejeon (KR); KIM, Byung Soo, 34124 Daejeon (KR); BAE, Sun Hyuk, 34124 Daejeon (KR); LEE, Jun Young, 34124 Daejeon (KR)
(74) Representative: Prüfer & Partner mbB Patentanwälte · Rechtsanwälte

(57) **Abstract**

The present disclosure relates to a pouch-type battery cooling apparatus. A pouch-type battery cooling apparatus according to an embodiment of the present disclosure includes: a case (100) in which a plurality of pouch-type batteries (10) are accommodated and which is filled with a coolant contacting the pouch-type batteries (10); a coolant space (200) between a lower portion of the pouch-type batteries (10) and a bottom surface of the case (100); a support unit (300) disposed in the coolant space (200) to support the pouch-type batteries (10); and a cooling flow path (400) provided by the support unit (300) and configured to guide a flow of the coolant flowing beneath a lower portion of the pouch-type batteries (10).

## Description

### [BACKGROUND OF THE INVENTION]

### Technical Field

The embodiments of the present disclosure relate generally to a pouch-type battery immersion cooling apparatus including a cooling structure and a support structure.

### Description of the Related Art

Immersion cooling technology is gaining attention as a means for minimizing a risk of fire and thermal runaway of a battery, and is applied to an energy storage system (ESS) including a high energy density lithium-ion battery module.

Some pouch-type batteries used in battery modules, such as lithium-ion battery modules, are stacked and used in a thin and wide shape. In such pouch-type batteries, deformation, swelling, or sagging of a cell may occur during long-term operation.

In some systems, a separate support structure for supporting a pouch-type battery has not been sufficiently considered, and as a result, during long-term operation, a position of a cell may be displaced or deformation may occur, cooling performance may deteriorate, and accordingly, the risk of propagation due to thermal runaway propagation may increase.

### [SUMMARY OF THE INVENTION]

Embodiments of the present disclosure provide a pouch-type battery immersion cooling apparatus that may maintain structural stability and cooling performance of a pouch-type battery.

According to the present invention, a pouch-type battery cooling apparatus includes a case in which one or more pouch-type batteries are accommodated, and which is filled with a coolant that contacts the one or more pouch-type batteries; a coolant space between a lower portion of the one or more pouch-type batteries and a bottom surface of the case; a support unit disposed in the coolant space and supporting the one or more pouch-type batteries; and a cooling flow path provided by the support unit and configured to guide a flow of the coolant flowing beneath the lower portion of the one or more pouch-type batteries.

In some non-limiting embodiments, the support unit may be disposed along a longitudinal direction of the one or more pouch-type batteries.

In some non-limiting embodiments, the support unit may include a plurality of blocks disposed to provide distributed support for a load of the one or more pouch-type batteries, and gaps between the blocks may form the cooling flow path.

In some non-limiting embodiments, the support unit may include a support board contacting a lower surface of the one or more pouch-type batteries, and a plurality of blocks positioned below the support board and disposed to provide distributed support for a load of the one or more pouch-type batteries, and gaps between the blocks may form the cooling flow path.

In some non-limiting embodiments, the plurality of blocks are configured such that gaps between the blocks become narrower toward a central portion in a longitudinal direction of the one or more pouch-type batteries, so that a width of the cooling flow path becomes narrower toward the central portion.

In some non-limiting embodiments, the plurality of blocks may comprise a plurality of pairs of sub-blocks facing each other in a thickness direction of the one or more pouch-type batteries, and a fluid distribution path may be formed between the pairs of sub-blocks.

In some non-limiting embodiments, the plurality of blocks may have angular shapes or curved shapes.

In some non-limiting embodiments, the support unit may be formed as an integral block to support a load of the one or more pouch-type batteries, and a plurality of cooling flow paths may be formed in the block in a thickness direction of the one or more pouch-type batteries.

In some non-limiting embodiments, the support unit may have a tapered shape that becomes narrower toward a central portion in a longitudinal direction of the one or more pouch-type batteries, so that a width of the cooling flow path becomes narrower toward the central portion.

In some non-limiting embodiments, the support unit may include an elastic part configured to absorb vibration.

In some non-limiting embodiments, the support unit may include a detection sensor configured to detect a sagging state or a deformation state of the one or more pouch-type batteries is installed in the support unit.

In some non-limiting embodiments, a cooling layer may be disposed on an upper portion of the pouch-type batteries.

In some non-limiting embodiments, a support plate may be provided at at least one surface of the one or more pouch-type batteries, a channel may be formed inside the support plate along a width direction of the one or more pouch-type batteries, and the channel of the support plate may be in communication with the cooling flow path.

### [BRIEF DESCRIPTION OF THE DRAWINGS]

The above and other objects, features and other advantages of the embodiments of the present disclosure will be more clearly understood from the following detailed description taken in conjunction with the accompanying drawings.
FIG. 1 is a schematic view of a pouch-type battery cooling apparatus according to an embodiment of the present disclosure.
FIG. 2 is a schematic view illustrating a pouch-type battery and a support unit (a rectangular type block) in the pouch-type battery cooling apparatus according to an embodiment of the present disclosure.
FIG. 3 is a schematic view illustrating a pouch-type battery and a support unit (a curved type block) in the pouch-type battery cooling apparatus according to an embodiment of the present disclosure.
FIG. 4 is a schematic view illustrating a pouch-type battery and a support unit (a rectangular type block, a sub-block, and a fluid distribution path) in the pouch-type battery cooling apparatus according to an embodiment of the present disclosure.
FIG. 5 is a schematic view illustrating a pouch-type battery and a support unit (a support board and a rectangular type block) in the pouch-type battery cooling apparatus according to an embodiment of the present disclosure.
FIG. 6 is a schematic view illustrating a pouch-type battery and a support unit (an integral block and a through-hole) in the pouch-type battery cooling apparatus according to an embodiment of the present disclosure.
FIG. 7 is a schematic view illustrating a fluid flow in a support unit and a channel in an immersion cooling apparatus including the support unit (a rectangular type block), according to an embodiment of the present disclosure.
FIG. 8 is a schematic view illustrating a pouch-type battery and a support unit (a tapered shape) in the pouch-type battery cooling apparatus according to an embodiment of the present disclosure.
FIG. 9 is a schematic view illustrating a fluid flow in a support unit and a channel in an immersion cooling apparatus including the support unit (a tapered shape), according to an embodiment of the present disclosure.
FIG. 10 is a schematic top plan view illustrating a pouch-type battery and a support unit (a tapered shape) in an immersion cooling apparatus including the support unit, according to an embodiment of the present disclosure.
FIG. 11A is a schematic view illustrating an arrangement of an elastic part and a detection sensor according to an embodiment of the present disclosure.
FIG. 11B is a schematic view illustrating an arrangement of an elastic part and a detection sensor according to an embodiment of the present disclosure.
FIG. 11C is a schematic view illustrating an arrangement of an elastic part and a detection sensor according to an embodiment of the present disclosure.

### [DETAILED DESCRIPTION OF THE INVENTION]

Hereinafter, exemplary embodiments of the present disclosure will be described in detail with reference to the accompanying drawing so that those skilled in the art may readily practice the present disclosure. However, since various changes may be made in the embodiments or aspects, the scope of the patent disclosure is not limited or restricted by these embodiments or aspects. It should be understood that all modifications, equivalents, and alternatives for the embodiments or aspects are comprised in the scope of the present disclosure. For example, it is to be understood that the present disclosure may assume various alternative variations and step sequences, except where expressly specified to the contrary. It is also to be understood that the specific devices and processes illustrated in the attached drawings, and described in the following detailed description, are simply exemplary and non-limiting embodiments or aspects of the disclosed subject matter. Hence, specific dimensions and other physical characteristics related to the embodiments or aspects disclosed herein are not to be considered as limiting.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Where only one item is intended, the term "one" or similar language is used. Also, as used herein, the terms "comprise", "comprises", "comprising", "include", "includes", "including", "has", "have", "having", "provide", "provides", "providing", or the like are intended to be open-ended terms. Further, the phrase "based on" is intended to mean "based at least partially on" unless explicitly stated otherwise. In addition, reference to an action being "based on" a condition may refer to the action being "in response to" the condition. For example, the phrases "based on" and "in response to" may, in some non-limiting embodiments or aspects, refer to a condition for automatically triggering an action (e.g., a specific operation of an electronic device, such as a computing device, a processor, and/or the like).

It will be understood that when a component is described to as being "connected", "combined" or "coupled" to another component, the component may be directly connected or coupled to the other component, but it may be "connected", "combined" or "coupled" to the other component by an intervening other component that may be present.

Also, as used herein, the terms "upper", "lower", "bottom", "side", "lateral", or the like are used with reference to the respective positions or orientations, respectively, shown in the drawings for representing a positional relationship in the given context. Specifically, the terms "upper", "lower", and "bottom" refer to a width direction of a pouch-type battery perpendicular to a longitudinal direction and a thickness direction of the pouch-type battery. In a three-dimensional Cartesian coordinate system, the longitudinal direction corresponds to the X direction, the thickness direction to the Y direction, and the width direction to the Z direction.

Further, in describing the components of the embodiment or aspect, the meaning of "or" may mean each of the components, may mean two or more of the components, or may mean all of the components. For example, it should be understood that the expressions "a, b or c" represent any one of "a," "b," "c," "a and b," "a and c," "b and c," and "a, b and c."

Components comprised in one embodiment or aspect and components comprising common functions will be described using the same names in other embodiments or aspects. The description given in one embodiment or aspect may be applied to other embodiments or aspects, and therefore will not be described in detail within the overlapping range, unless there is a description opposite thereto.

As described above, in some systems, a cells in pouch-type batteries may be displaced or deformed. Moreover, in some systems the cooling performance of pouch-type batteries may deteriorate and a risk of thermal runaway propagation of the pouch-type batteries may increase.

Systems and methods disclosed herein include a pouch-type battery cooling apparatus that can support cells of pouch-type batteries. Systems and methods disclosed herein may reduce or prevent the displacement or deformation of the cells in pouch-type batteries. Additionally, systems and methods disclosed herein may increase the cooling performance of pouch-type batteries and mitigate the risk of thermal runaway propagation of pouch-type batteries.

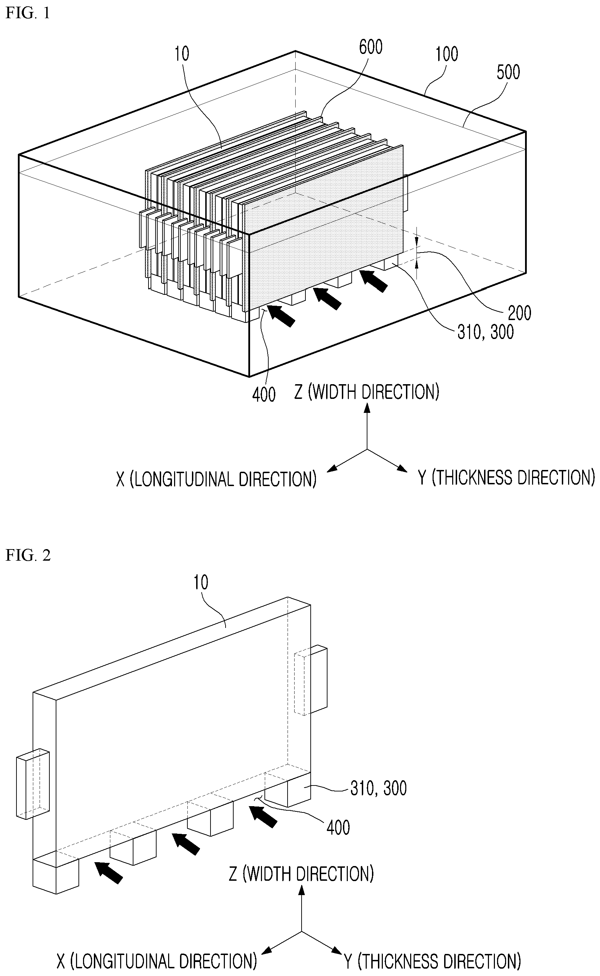

FIG. 1 is a schematic diagram of a pouch-type battery cooling apparatus according to an embodiment of the present disclosure.

As illustrated, a pouch-type battery 10 cooling apparatus according to an embodiment of the present disclosure includes: a case 100 in which one or more pouch-type batteries 10 are accommodated and which is filled with a coolant that contacts the pouch-type batteries 10. A coolant space 200 is formed between a lower portion of the pouch-type battery 10 and a bottom surface of the case 100. A support unit 300 is disposed in the coolant space 200 to support the pouch-type battery 10, and a cooling flow path 400 is formed by the support unit 300 to guide a flow of the coolant flowing beneath the lower portion of the pouch-type battery 10.

The case 100 according to an embodiment of the present disclosure is formed with an internal space such that a plurality of pouch-type batteries 10 or battery modules can be accommodated therein, and may be formed in a sealed structure.

The case 100 may be formed of a metal material, a synthetic resin material provided with insulating properties, or a composite material thereof. In addition, a heat-blocking member may be connected to an outer periphery of the case 100. For example, it may be surrounded by a jacket-type heating structure.

The coolant is accommodated in the internal space of the case 100, and the coolant may be circulated by forced convection or natural convection. A cooling layer 500 may be formed on an upper side of the case 100 to assist a circulation flow of the coolant.

The coolant space 200 according to an embodiment of the present disclosure may be formed between a lower portion of the pouch-type battery 10 and a bottom surface of the case 100.

The coolant space 200 according to an embodiment of the present disclosure is a distance between the lower portion of the pouch-type battery 10 and the bottom surface, and may form a channel through (depicted by arrows in FIG. 1) which the coolant can flow at the lower portion of the pouch-type battery 10. That is, as a region where retention, flow, or circulation of the coolant occurs, it may assist the circulation flow of the coolant rising from a lower portion to an upper portion of the case 100.

The support unit 300 according to an embodiment of the present disclosure is disposed within the coolant space 200 and may support the pouch-type battery 10.

The support unit 300 may provide a stable contact surface or support surfaces at regular intervals over the entire lower portion of the pouch-type battery 10 to prevent sagging of the pouch-type battery 10 due to gravity during long-term immersion.

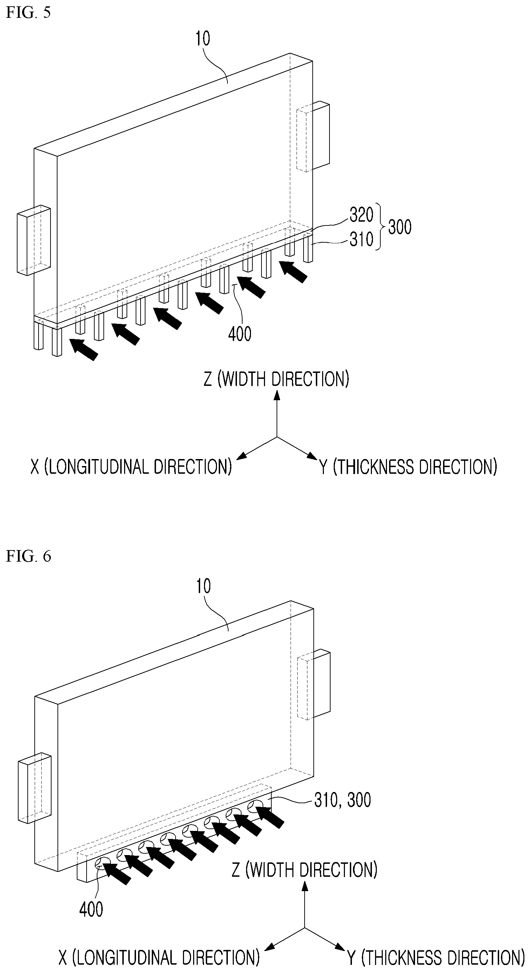

For example, the support unit 300 may be an integral structure extending along a longitudinal direction of the battery (see FIG. 6), or may be a structure in which a plurality of blocks 310 are disposed at regular intervals along the same direction (see FIGS. 2 to 5).

The cooling flow path 400 according to an embodiment of the present disclosure is formed by the support unit 300 and may guide the flow of the coolant flowing beneath the lower portion of the pouch-type battery 10.

The cooling flow path 400 may be configured as at least one of a path defined by the support unit 300 or a passage, a gap, and a slot provided in the support unit 300 itself. For example, the cooling flow path 400 may be formed by a gap between the support units 300 or a through-hole inside the support unit 300. The cooling flow path 400 may constitute a part of a circulation flow leading from the coolant space 200 to the upper cooling layer 500.

The support unit 300 according to an embodiment of the present disclosure may be disposed along the longitudinal direction of the pouch-type battery 10.

The support unit 300 supports a lower portion of the pouch-type battery 10, and may be arranged continuously or at regular intervals along the longitudinal direction of the pouch-type battery 10. In the examples shown in the figures, when the longitudinal direction of the pouch-type battery 10 is an X direction, a width direction is a Z direction, and a thickness direction is a Y direction. The support unit 300 may be disposed based on the longitudinal direction of the battery as shown in FIGS. 2 to 10.

As the support unit 300 is disposed along the longitudinal direction of the pouch-type battery 10, the lower portion of the pouch-type battery 10 is uniformly supported over the entire length range, and sagging of the lower portion of the pouch-type battery 10 may be minimized. In addition, the arrangement of the support unit 300 in the longitudinal direction allows the flow of the coolant within the coolant space 200 to be kept substantially uniformly distributed in the longitudinal direction.

Here, the term "substantially uniformly" may refer to a state in which a flow of the coolant within the coolant space 200 is maintained within an allowable deviation over an entire longitudinal direction. The allowable deviation may refer to a range in which a distribution of a flow rate, a flow velocity, or a residence time at each position along the longitudinal direction varies within a predetermined ratio relative to a design criterion. For example, the allowable deviation may be defined as a state in which a difference between a maximum value and a minimum value is maintained within a predetermined ratio relative to an average value. Accordingly, "substantially uniformly" does not mean a perfectly uniform distribution, but rather refers to a distributed flow state in which concentration or stagnation in a specific region does not occur.

For example, a deviation in a flow rate or a flow velocity at each position in the longitudinal direction may be maintained within ±5% relative to an average value, and may be maintained within ±10% relative to the average value when considering mass-production process deviations, assembly deviations, or operating condition deviations. Accordingly, concentration or stagnation of the coolant flow in a specific section within the coolant space 200 may be reduced, and uniform cooling performance may be maintained over an entire longitudinal direction of the pouch-type battery 10.

In addition, according to an embodiment of the present disclosure, a longitudinal-direction width of the support unit 300 may be formed within a range of 10% to 50% relative to an overall width obtained by adding a width of the support unit 300 and a width of the coolant space 200. For example, when the longitudinal-direction width of the support unit 300 exceeds 50% of the overall width, a width of the coolant space 200 may decrease such that flow resistance or pressure loss of the coolant increases, and a circulation flow of the coolant may not be smooth. In contrast, when the longitudinal-direction width of the support unit 300 is less than 10% of the overall width, structural strength for stably supporting a load of the pouch-type battery 10 may become insufficient, and sagging, deformation, or positional deviation may occur during long-term operation. Accordingly, when the longitudinal-direction width of the support unit 300 is set within the above-described range, uniform flow distribution of the coolant and structural stability of the pouch-type battery 10 may be secured together.

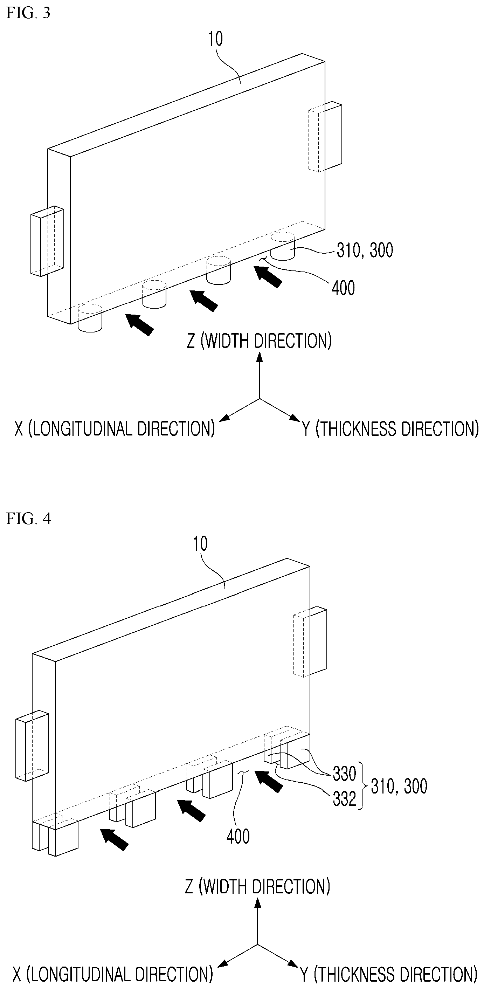

The support unit 300 may be implemented in various shapes such as, e.g., a block, a sub-block (see FIG. 4), a support board 320 (see FIG. 5), or an integral block. These shapes may be implemented as an angular type, a curved type, a type including sub-blocks, and a type including through-holes, respectively, as in FIGS. 3, 4, 5, and 6. In some example embodiments, the shapes of blocks, sub-blocks, and support boards 320 of the support unit 300 may differ from those illustrated in the figures.

In examples in which the case 100 accommodates a plurality of pouch-type batteries 10, the arrangement of the support unit 300 in the longitudinal direction may also contribute to maintaining a gap between each of the pouch-type batteries 10. In such examples, each of the pouch-type batteries 10 may be arranged at a uniform interval, so that the flow may be kept constant throughout the entire coolant space 200.

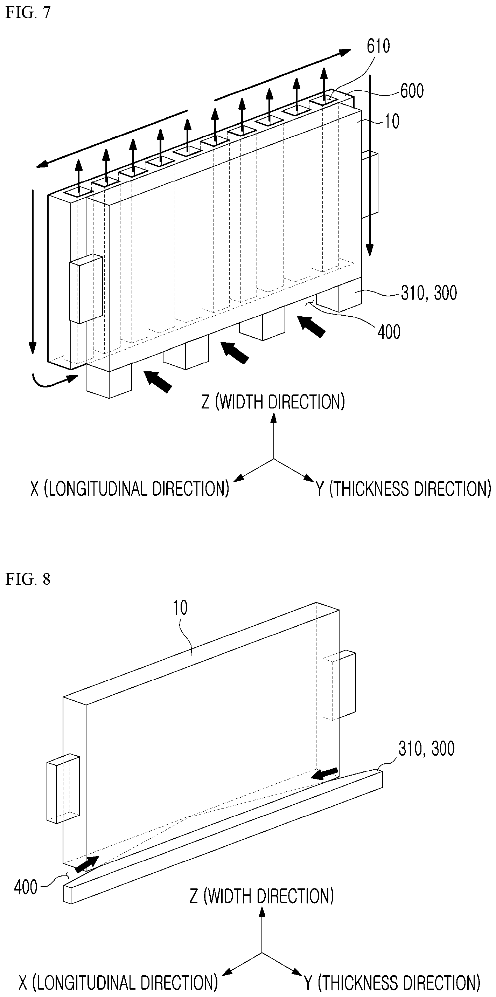

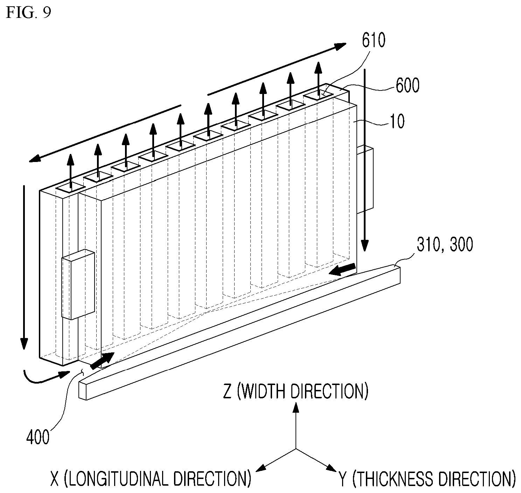

In addition, the support unit 300 forms a flow path being continuous with the cooling flow path 400 in a lower portion of the pouch-type battery 10, allowing the coolant to be uniformly distributed and introduced along the entire support unit 300. In addition, the support unit 300 allows the coolant to be supplied to channels 610 formed in a support plate 600 between the pouch-type batteries 10, such that the circulation flow can be made smoother (see FIG. 7 and FIG. 9).

As described above, according to an embodiment of the present disclosure, by disposing the support unit 300 along the longitudinal direction of the pouch-type battery 10, a flow of the coolant may be uniformly distributed at a lower portion of the pouch-type battery 10. In addition, the pouch-type battery 10 may be maintained without structural sagging during long-term immersion, thereby maintaining cooling performance and structural stability.

The support unit 300 according to an embodiment of the present disclosure includes a plurality of blocks 310 disposed to provide distributed support for a load of the pouch-type battery 10, and a gap between the blocks 310 may form the cooling flow path 400.

Although FIGS. 2 to 5 illustrate that the blocks 310 are disposed at a constant interval for convenience of description, the number and interval of the blocks 310 may vary according to the size of the pouch-type battery 10, the size of a lower load distribution, and the size of the coolant space 200.

Referring to FIG. 2, a plurality of blocks 310 may be disposed along the longitudinal direction of the pouch-type battery 10. However, the arrangement method of the blocks 310 according to FIG. 2 shows an example of various arrangement methods of the blocks 310. Therefore, in the support unit 300 according to another embodiment of the present disclosure, the blocks 310 may be arranged at equal intervals, unequal intervals, or such that the interval becomes narrower toward the central portion along the longitudinal direction.

The plurality of blocks 310 may be formed in an angular type, a curved type, a polygonal shape, or the like, and FIG. 2 exemplarily illustrates a rectangular type block 310, and FIG. 3 exemplarily illustrates a curved type block 310. In this case, the shape of the block 310 may be appropriately selected according to the load distribution of the pouch-type battery 10, the flow direction of the coolant, and the inner shape of the case 100, and the block 310 may be formed not only in a single shape but also in a composite shape.

The gap between these plurality of blocks 310 provides a structure for forming the cooling flow path 400 and provides a passage through which the coolant is introduced beneath a lower portion of the pouch-type battery 10. In addition, it may provide a flow path for adjusting the flow velocity of the coolant or maintaining a uniform flow distribution.

Referring to FIG. 7, the coolant may be introduced toward a lower portion of the pouch-type battery 10 along a gap between the blocks 310. In this case, the coolant may be uniformly supplied to the entire coolant space 200 while being distributed along the gap between the blocks 310.

The gap between the blocks 310 may be formed to maintain a constant interval along the longitudinal direction of the pouch-type battery 10, and the width of the gap may be variously adjusted according to the viscosity of the coolant, the supply amount of the coolant, or the height of the coolant space 200. In addition, the coolant is supplied to a lower portion of the channels 610 formed in the support plate 600 between the pouch-type batteries 10, so that the circulation flow can be made smoother (see FIG. 7 and FIG. 9).

As described above, according to an embodiment of the present disclosure, since the support unit 300 is formed of a plurality of blocks 310, the load of the pouch-type battery 10 can be uniformly distributed over the entire area of the blocks 310 without being locally concentrated. Thereby, sagging, deformation, warping, or the like, which may occur during long-term use of the pouch-type battery 10, can be suppressed. In addition, since the gap between the blocks 310 constitutes the cooling flow path 400, the flow of the coolant can be stably maintained, and a constant flow can be formed over the entire longitudinal direction of the pouch-type battery 10.

Referring to FIG. 5, the support unit 300 according to an embodiment of the present disclosure comprises a support board 320 contacting a lower surface of the pouch-type battery 10, and a plurality of blocks 310 formed below the support board 320 and disposed to provide distributed support for a load of the pouch-type battery 10, wherein a gap between the blocks 310 may form the cooling flow path 400.

According to an embodiment of the present disclosure, the support unit 300 is for supporting a lower portion of the pouch-type battery 10 and includes a support board 320 and a plurality of blocks 310, and the support unit 300 forms a structure that stably receives the entire load based on the support board 320 that is in direct contact with a lower surface of the pouch-type battery 10.

The support board 320 is a structure in the shape of a flat plate, and specifically, may be formed to correspond to the lower surface of the pouch-type battery 10 to support the entire lower surface of the pouch-type battery 10. For example, it may provide a continuous support surface over the surface of the pouch-type battery 10 in longitudinal direction and the thickness direction.

Referring to FIG. 5, the support board 320 may be illustrated as a structure contacting a lower surface of the pouch-type battery 10. However, the shape of the support board 320 according to FIG. 5 is an example of various embodiments, and in another embodiment of the present disclosure, the support board 320 may be variously formed as a structure including a single flat plate, a multi-laminated plate, or a local reinforcing rib.

The plurality of blocks 310 formed below the support board 320 may be coupled to the support board 320 and disposed to provide distributed support for a load of the pouch-type battery 10, and may be disposed on a bottom surface of the support board 320 in a form spaced apart at a constant interval. The blocks 310 may be formed in various shapes such as an angular type, a curved type, a polygonal shape, or the like, and in FIG. 5, rectangular type blocks 310 are illustrated as an example.

As described above, according to an embodiment of the present disclosure, by configuring the support unit 300 to include the support board 320 and the plurality of blocks 310, a load of the pouch-type battery 10 can be stably supported in a distributed manner, and since the coolant flows smoothly through the cooling flow path 400 formed along the gap between the blocks 310, the pouch-type battery 10 can be stably supported and cooling performance can be improved.

According to an embodiment of the present disclosure, the plurality of blocks 310 are formed such that gaps therebetween becomes narrower toward a central portion in the longitudinal direction of the pouch-type battery 10, so that a width of the cooling flow path 400 becomes narrower toward the central portion, and thus a flow velocity of the coolant may be adjusted. For example, a narrower width of the cooling flow path 400 may result in an increased velocity of the coolant, and a greater width of the cooling flow path 400 may result in a decreased velocity of the coolant.

The plurality of blocks 310 are arranged along the longitudinal direction of the pouch-type battery 10 and have a structure in which the width of the cooling flow path 400 changes due to a change in the gap between the blocks 310. In another embodiment of the present disclosure, the blocks 310 may be formed in a linear arrangement, a curved arrangement, or a multi-row arrangement.

The plurality of blocks 310 have a structure in which gaps therebetween becomes narrower toward a central portion in the longitudinal direction of the pouch-type battery 10. This is a variable gap structure for controlling fluid flow, and means a structure in which a gap between a pair of blocks 310 located at the central portion in the longitudinal direction of the pouch-type battery 10 is set to be smaller than a gap between a pair of blocks 310 located on an outer side. In this case, the width of the cooling flow path 400 naturally changes due to the difference in the gap between the blocks 310, and the flow velocity distribution of the coolant may be adjusted based on the differences in the gaps.

As described above, according to an embodiment of the present disclosure, the width of the cooling flow path 400 may be controlled by forming the gap between the plurality of blocks 310 to become narrower toward the central portion in the longitudinal direction of the pouch-type battery 10. Accordingly, since the flow velocity of the coolant may be adjusted based on different widths of the gap between the blocks 310 in the coolant flow path, uniform cooling performance may be maintained over the entire lower portion of the pouch-type battery 10.

Referring to FIG. 4, according to an embodiment of the present disclosure, the plurality of blocks 310 may be formed as a pair of sub-blocks 330 facing each other in the thickness direction of the pouch-type battery 10, and a fluid distribution path 332 may be formed between the pair of sub-blocks 330.

The sub-block 330 according to FIG. 4 shows an example among various sub-blocks, and in other embodiments of the present disclosure, the sub-block 330 may be formed in a shape such as a hexagonal, elliptical, or cylindrical shape, or the number of sub-blocks 330 may be changed.

A fluid distribution path 332 may be formed between the pair of sub-blocks 330. The fluid distribution path 332 is a flow path that guides the coolant to pass through the space provided inside of the support unit 300 and to flow to the lower portion of the pouch-type battery 10, and may provide a fluid passage in the longitudinal direction or the thickness direction formed along a separation space between the sub-blocks 330. At this time, the fluid distribution path 332 may be formed in a linear, curved, or multi-stage shape depending on the shape and gap of the sub-blocks 330. For example, the structure depicted in FIG. 4 may result in a linear fluid distribution path 332.

In addition, in other embodiments of the present disclosure, the fluid distribution path 332 may be associated with a through-hole penetrating a part of the sub-block 330, or the sub-block 330 may be formed in a porous structure, so that a fluid distribution effect may be improved. That is, the fluid distribution path 332 may subdivide and uniformly distribute the flow of the coolant flowing beneath the lower portion of the pouch-type battery 10. Accordingly, cooling performance may be improved, and a temperature deviation at the lower portion of the pouch-type battery 10 may be minimized.

According to an embodiment of the present disclosure, the plurality of blocks 310 may be formed in an angular type or a curved type.

In some example embodiments, the angular type may include, e.g., a polygonal shape such as a rectangle, a hexagon, or an octagon, and the curved type may include, e.g., a curve-based shape such as a circle, an ellipse, or a curved shape. The shape of the block 310 may be selected in consideration of the shape of the lower surface of the pouch-type battery 10, the shape of the coolant space 200, and/or the flow direction of the coolant, or the like.

FIG. 2 is a schematic diagram illustrating an example in which the plurality of blocks 310 are formed in a rectangular type. Referring to FIG. 2, the plurality of blocks 310 are illustrated in a rectangular shape, but the present disclosure is not limited thereto. However, the rectangular type block 310 scheme according to FIG. 2 shows an example of various rectangular type block 310 shape schemes. Therefore, in other embodiments of the present disclosure, the number of sides, angles, or external dimensions of the rectangular type block 310 may be different from those depicted in FIG. 2.

FIG. 3 is a schematic diagram illustrating an example in which the plurality of blocks 310 are formed in a curved type. Referring to FIG. 3, the plurality of blocks 310 are illustrated in a curve-based shape, and the curved type may be formed, e.g., in an elliptical or arc shape. In other embodiments of the present disclosure, the curvature, radius of curvature, or curve shape of the curved type block 310 may be changed.

For example, when a rectangular type block 310 is applied, a separation space between the blocks 310 forms a linear cooling flow path 400 so that the coolant may maintain a straight flow. On the other hand, when a curved type block 310 is applied, the coolant may form a streamlined flow around the block 310, and the distributivity of the coolant may be increased.

In the present disclosure, the shape of the plurality of blocks 310 may be changed and applied in response to various design requirements, and the shape of the block 310 may be determined in consideration of the size of the coolant space 200, the arrangement of the cooling layer 500, the channels 610 of the support plate 600 (see FIG. 7), or the like.

As described above, according to an embodiment of the present disclosure, by forming the plurality of blocks 310 in a rectangular type or a curved type, the fluid flow beneath the pouch-type battery 10 may be adjusted and the degree of distribution of the coolant may be adjusted, so that cooling performance is improved and a temperature deviation of the pouch-type battery 10 may be reduced.

A support unit 300 according to an embodiment of the present disclosure is formed as an integral block 310 to support a load of the pouch-type battery 10, and a plurality of cooling flow paths 400 may be formed in the block 310 in the thickness direction of the pouch-type battery 10.

That the support unit 300 is formed as an integral block 310 means a shape in which the support unit 300 is manufactured as a single continuous structure, rather than separate elements like the plurality of blocks 310, to support the load of the pouch-type battery 10 in a single structure. Such an integral block 310 may be designed with an appropriate external shape in consideration of the shape of the pouch-type battery 10, the size of the coolant space 200, the distribution of the coolant, or the like, and may include, e.g., an angular type or curved type external shape such as a rectangle, a hexagon, an ellipse, or an arc shape. The integral block 310 may uniformly support the entire lower surface of the pouch-type battery 10.

FIG. 6 is a schematic diagram illustrating an example of a configuration to which an integral block 310 is applied. Referring to FIG. 6, the integral block 310 is illustrated as a single continuous structure, and is illustrated in a rectangular type for convenience of description, but is not limited thereto.

According to an embodiment, a plurality of cooling flow paths 400 may be formed in the block 310 in the thickness direction of the pouch-type battery 10. The cooling flow path 400 is a passage formed to allow the coolant to flow through the inside of the block 310, and may be formed as a plurality of flow paths such as linear, curved or branched flow paths. Since the cooling flow path 400 may be formed to penetrate in the thickness direction of the pouch-type battery 10, the coolant may flow in or out from a lower portion to an upper portion or from an upper portion to a lower portion of the pouch-type battery 10.

For example, the cooling flow paths 400 may be disposed at equal intervals or stepped intervals, and an arrangement pattern may be adjusted according to flow conditions of the coolant space 200. The diameter, number of arrangements, or spacing of the cooling flow paths 400 formed inside the integral block 310 may be optimized according to the flow velocity, pressure, or distribution characteristics of the coolant.

The through-holes illustrated in FIG. 6 represent an embodiment of the cooling flow path 400, and the shapes of the through-holes are illustrated as a circle. In some example embodiments, the through-holes may include one or more of various shapes such as a rectangle, a hexagon, or an ellipse. Therefore, in other embodiments of the present disclosure, the cooling flow path 400 may be formed in a porous structure, or a stepped diameter change may be applied along the longitudinal direction or the thickness direction.

As described above, according to an embodiment of the present disclosure, as a plurality of cooling flow paths 400 are formed in the integral block 310, the coolant may be uniformly distributed from below the lower surface of the pouch-type battery 10 to an upper portion, and this may contribute to maintaining the straightness of the coolant, improving coolant distribution, or improving temperature uniformity of the lower surface of the pouch-type battery 10. In particular, when long-term operation is required, such as in an ESS environment, the integral block 310 may maintain load support performance and stability of the cooling flow path 400.

In some examples, the support unit 300 is formed in a tapered shape that becomes narrower toward the central portion in the longitudinal direction of the pouch-type battery 10, such that the width of the cooling flow path 400 becomes narrower toward the central portion, and thus the flow velocity of the coolant may be adjusted.

The support unit 300 being formed in a tapered shape toward the central portion in the longitudinal direction of the pouch-type battery 10 means a shape in which a width or a protruding height of the support unit 300 gradually changes to become maximum at the central portion in the longitudinal direction.

FIG. 8 is a schematic diagram illustrating the pouch-type battery 10 and the tapered shape support unit 300. Referring to FIG. 8, the support unit 300 is illustrated in a tapered shape in which a width in the thickness direction of the pouch-type battery 10 gradually increases from both end portions toward the central portion in the longitudinal direction. In other embodiments of the present disclosure, a taper angle, a taper starting point, a step formation method, or the like may be implemented within the support unit based on system requirements.

As the support unit 300 is formed in a tapered shape, a width of the cooling flow path 400 becomes narrower toward the central portion in the longitudinal direction of the pouch-type battery 10. The gradual decrease in the width of the cooling flow path 400 may result in a width of a passage through which the coolant moves being minimized at the central portion. This change in width may adjust the flow velocity of the coolant. In a narrowing section, a flow velocity of the coolant may increase, and in a relatively wide section, the flow velocity of the coolant may decrease. For example, in a section where the flow velocity increases, the coolant may be more uniformly distributed over the entire lower portion of the pouch-type battery 10.

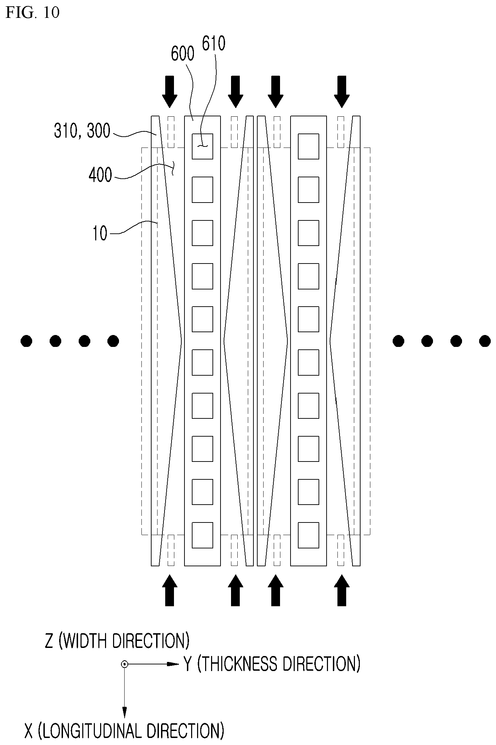

FIG. 9 is a schematic diagram illustrating a fluid flow of a support unit 300 and a channel in an immersion cooling apparatus including a support unit 300 (tapered shape) according to an embodiment of the present disclosure. FIG. 10 is a top schematic diagram illustrating the pouch-type battery 10 and the support unit 300 (tapered shape) in the immersion cooling apparatus including the support unit 300 according to an embodiment of the present disclosure.

Referring to FIGS. 9 and 10, the coolant is illustrated in a form in which a flow velocity increases in a direction in which a width narrows along the cooling flow path 400 formed by the tapered shape support unit 300, but this is merely an example, and various flow methods may be applied. Therefore, in other embodiments of the present disclosure, for coolant distribution, a change in the width of the cooling flow path 400 may be configured in stages, or a non-linear tapered structure may be applied.

According to an embodiment of the present disclosure, when the support unit 300 is formed in a tapered shape, the flow velocity of the coolant is adjusted in a state where a width of the cooling flow path 400 becomes narrower toward the central portion, such that a flow distribution of the coolant may become uniform over the entire lower portion of the pouch-type battery 10. This guides the coolant to flow evenly over the entire lower surface without being concentrated at a specific point, thereby reducing a temperature deviation on the lower surface of the pouch-type battery 10. In addition, by supplying the coolant to a channel 610 formed in a support plate 600 between the pouch-type batteries 10, a circulation flow may be more smoothly achieved (see FIG. 9).

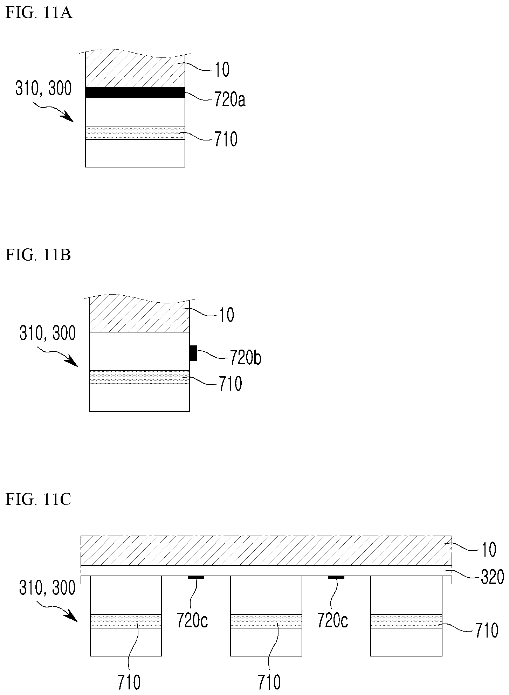

FIG. 11A is a schematic view illustrating an arrangement of an elastic part and a detection sensor according to an embodiment of the present disclosure. FIG. 11B is a schematic view illustrating an arrangement of an elastic part and a detection sensor according to an embodiment of the present disclosure. FIG. 11C is a schematic view illustrating an arrangement of an elastic part and a detection sensor according to an embodiment of the present disclosure.

Referring to FIG. 11A, FIG. 11B, and FIG. 11C, according to an embodiment of the present disclosure, the support unit 300 may include an elastic part 710 to absorb vibration.

Referring to FIG. 11A, FIG. 11B, and FIG. 11C, the elastic part 710 may be an elastic structure to which deformability is imparted inside the support unit 300 or in a partial region of the support unit 300. Such an elastic structure may absorb vibration, impact, micro-deformation, or the like generated from the outside to alleviate mechanical stress transmitted to the pouch-type battery 10.

The elastic part 710 may be formed using a material such as rubber, silicon, an elastic polymer, a metal spring structure, or the like. In addition, the elastic part 710 may be configured in the form of an elastic layer inserted around a block 310 of the support unit 300, at a lower portion of the support unit 300, or over the entirety of the support unit 300.

For example, the elastic part 710 may include an elastic core structure formed inside the block 310, an elastic pad structure installed at a lower portion of the block 310, an elastic cover structure surrounding the entire support unit 300, or the like.

As such, according to an embodiment of the present disclosure, when the support unit 300 includes the elastic part 710, the pouch-type battery 10 cooling apparatus may reduce a magnitude of vibration transmitted through the support unit 300 and alleviate an impact acting on a lower portion of the pouch-type battery 10 to prevent fatigue accumulation due to long-term operation. Accordingly, the support unit 300 according to an embodiment of the present disclosure may be usefully utilized in a system, such as an ESS, in which a vibration and impact environment exists and long-term operation stability is important.

Referring to FIG. 11A, FIG. 11B, and FIG. 11C, a detection sensor 720a, 720b, 720c configured to detect a sagging state or a deformation state of the pouch-type battery 10 may be installed in the support unit 300 according to an embodiment of the present disclosure. The detection sensor 720a, 720b, 720c may be formed integrally with the support unit 300 or may be formed in a specific region of the support unit 300 to observe a sagging state or a deformation state of the pouch-type battery 10 in real time or periodically.

The detection sensor 720a, 720b, 720c may include various sensors capable of detecting a mechanical deformation of the pouch-type battery 10. For example, the detection sensor 720a, 720b, 720c may be at least one of a strain gauge, a strain rate gauge, a pressure sensor, and a position change sensor. The detection sensor 720a, 720b, 720c may be installed at one surface of the support unit 300 or embedded inside the support unit 300. Accordingly, the detection sensor may detect a micro-deformation of a lower portion of the pouch-type battery 10, for example, sagging, displacement, inclination, or accumulated micro-deformation. Referring to FIG. 11A, the detection sensor 720a may be disposed on an upper surface of the support unit 300 (block 310) to measure deformation at a position adjacent to a lower surface of the pouch-type battery 10. Referring to FIG. 11B, the detection sensor 720b, 720c may be disposed on a side surface of the support unit 300 (block 310). Referring to FIG. 11C, the detection sensor 720c may be disposed below a support plate 320 between the blocks 310.

For example, when the detection sensor 720a is a pressure sensor, the detection sensor may be disposed on an upper surface of the support unit 300 to detect a change in contact pressure generated at a lower surface of the pouch-type battery 10, thereby detecting a sagging state (see FIG. 11A). When the detection sensor 720b is a strain gauge, the detection sensor may be attached to a surface of the support unit 300 to measure a strain of the support unit 300, thereby detecting a deformation state of the pouch-type battery (see FIG. 11B).

As described above, the detection sensor 720a, 720b, 720c according to an embodiment of the present disclosure may detect, at an early stage, various state changes of the pouch-type battery 10, such as mechanical fatigue accumulation that may occur during long-term operation in an ESS system, expansion and contraction changes in a long-term immersion state, or rapid deformation upon occurrence of a runaway reaction. Such a detection sensor 720a, 720b, 720c may be interlocked with a system controller.

According to an embodiment of the present disclosure, a cooling layer 500 may be formed on an upper portion of the pouch-type battery 10 such that a circulation flow is formed along with the cooling flow path 400.

The cooling layer 500 may be formed on an upper portion of the pouch-type battery 10 and provides a flow structure in communication with the coolant space 200. Accordingly, the cooling layer 500 may provide an upper path for removing heat from the upper portion of the pouch-type battery 10 and may be disposed to be continuous with or connected to the cooling flow path 400 to form a circulation flow.

The cooling layer 500 may be configured in various forms such as an upper plate or an upper channel. Referring to FIG. 1, the cooling layer 500 may be formed on an upper portion of the pouch-type battery 10, that is, on an upper side of the case 100, in the form of an upper plate. A flow path may be formed inside the upper plate.

In a natural convection type channel structure, in a flow of a fluid, a temperature of a flow distributed to a lower portion rises due to heat transferred from the pouch-type battery 10, and due to a resulting lower density of the fluid, the fluid moves upward. The fluid that has moved upward is cooled by the cooling layer 500 located at an upper portion and flows in a direction of a tab portion side of the pouch-type battery 10, and moves downward from the tab portion side, and the flow moves to a lower portion of the channel again, thereby forming a circulation structure. At this time, through a circulation flow which also interacts with the cooling flow path 400, a temperature distribution of the entire pouch-type battery 10 may be kept uniform.

Accordingly, the cooling layer 500 may reduce local hot spots on an upper portion of the pouch-type battery 10 and maintain stable temperature conditions even during long-term operation, thereby improving the overall stability of the pouch-type battery 10 cooling apparatus.

According to an embodiment of the present disclosure, a support plate 600 may be provided at at least one side of the one or more pouch-type batteries 10. The support plate 600 may be provided between a plurality of pouch-type batteries 10, and a channel may be formed inside the support plate 600 along a width direction of the pouch-type batteries 10. Accordingly, the channel 610 of the support plate 600 and the cooling flow path 400 may be in communication with each other.

The support plate 600 is disposed between pouch-type batteries to separate and support a plurality of pouch-type batteries 10, and a channel 610 is formed therein to allow a coolant to indirectly contact the widest surface of the pouch-type battery 10.

Referring to FIG. 7, FIG. 9, and FIG. 10, the support plate 600 may have a structure including channels 610 therein that extend along the width direction of the pouch-type battery 10. In other embodiments of the present disclosure, the channels 610 may be formed in various structures such as a straight line, a curved line, a branch pipe, or a lattice type. The channels 610 inside the support plate 600 are formed along the width direction of the pouch-type battery 10 to provide a path for a coolant to flow between the batteries.

The channel 610 of the support plate 600 and the cooling flow path 400 are disposed to be in communication with each other. Furthermore, the channel 610 may be directly connected to the cooling flow path 400 inside the support unit 300 through an upper surface or a side surface thereof. In addition, a structure may be implemented in which the coolant that has risen from the coolant space 200 (See FIG. 1) flows into the channel 610 inside the support plate 600, and the coolant that has moved along the channel 610 circulates back to the coolant space 200. In this case, a communication position between the cooling flow path 400 and the channel 610 may be formed on an upper surface or a side surface of the support unit 300.

As described above, according to an embodiment of the present disclosure, a support plate 600 is provided between the pouch-type batteries 10 and a channel 610 is formed inside the support plate 600, thereby providing a structure in which the channel 610 and the cooling flow path 400 are in communication with each other. Thereby, the flow of the coolant in a space between the pouch-type batteries 10 may be made uniform while the plurality of pouch-type batteries 10 are separated and supported. In addition, heat removal performance across the width direction of the pouch-type battery 10 may be improved, and heat concentration that may occur between the batteries may be reduced, thereby increasing the thermal stability of the entire system.

As described above, the pouch-type battery cooling apparatus according to an embodiment of the present disclosure may maintain cooling performance and structural stability because a flow path structure is secured to stably supply a coolant from a lower portion of a pouch-type battery, and the pouch-type battery is maintained without structural sagging in a long-term immersion state.

## Claims

1. A pouch-type battery cooling apparatus comprising:
a case (100) in which one or more pouch-type batteries (10) are accommodated, and which is filled with a coolant that contacts the one or more pouch-type batteries (10);
a coolant space (200) between a lower portion of the one or more pouch-type batteries (10) and a bottom surface of the case (100);
a support unit (300) disposed in the coolant space (200) and supporting the one or more pouch-type batteries (10); and
a cooling flow path (400) provided by the support unit (300) and configured to guide a flow of the coolant flowing beneath the lower portion of the one or more pouch-type batteries (10).

2. The pouch-type battery cooling apparatus according to claim 1, wherein the support unit (300) is disposed along a longitudinal direction of the one or more pouch-type batteries (10).

3. The pouch-type battery cooling apparatus according to claim 1 or 2, wherein the support unit (300) comprises a plurality of blocks (310) disposed to provide distributed support for a load of the one or more pouch-type batteries (10), and gaps between the blocks forms the cooling flow path (400).

4. The pouch-type battery cooling apparatus according to claim 1 or 2,
wherein the support unit (300) comprises a support board (320) contacting a lower surface of the pouch-type batteries (10), and a plurality of blocks (310) positioned below the support board (320) and disposed to provide distributed support for a load of the one or more pouch-type batteries (10), and
wherein gaps between the blocks (310) forms the cooling flow path (400).

5. The pouch-type battery cooling apparatus according to claim 3 or 4, wherein the plurality of blocks (310) are configured such that gaps between the blocks (310) becomes narrower toward a central portion in a longitudinal direction of the one or more pouch-type batteries (10), whereby a width of the cooling flow path (400) becomes narrower toward the central portion.

6. The pouch-type battery cooling apparatus according to any one of the claims 3 to 5, wherein the plurality of blocks (310) comprise a plurality of pairs of sub-blocks (330) facing each other in a thickness direction of the one or more pouch-type batteries (10), and a fluid distribution path (332) is formed between the pairs of sub-blocks (330).

7. The pouch-type battery cooling apparatus according to any one of the claims 3 to 6, wherein the plurality of blocks (310) have angular shapes or curved shapes.

8. The pouch-type battery cooling apparatus according to claim 2, wherein the support unit (300) is formed as an integral block (310) to support a load of the one or more pouch-type batteries (10), and a plurality of cooling flow paths (400) are formed in the block (310) in a thickness direction of the one or more pouch-type batteries (10).

9. The pouch-type battery cooling apparatus according to claim 2, wherein the support unit (300) has a tapered shape that becomes narrower toward a central portion in a longitudinal direction of the one or more pouch-type batteries (10), whereby a width of the cooling flow path (400) becomes narrower toward the central portion.

10. The pouch-type battery cooling apparatus according to any one of the preceding claims, wherein the support unit (300) comprises an elastic part configured to absorb vibration.

11. The pouch-type battery cooling apparatus according to any one of the preceding claims, wherein a detection sensor configured to detect a sagging state or a deformation state of the one or more pouch-type batteries (10) is installed in the support unit (300).

12. The pouch-type battery cooling apparatus according to any one of the preceding claims, wherein a cooling layer (500) is disposed on an upper portion of the pouch-type batteries (10).

13. The pouch-type battery cooling apparatus according to any one of the preceding claims, wherein a support plate (600) is provided at least one surface of the one or more pouch-type batteries (10), a channel (610) is formed inside the support plate (600) along a width direction of the pouch-type batteries (10), and the channel (610) of the support plate (600) communicates with the cooling flow path (400).
